Europäisches Patentamt

**European Patent Office**

**Office européen des brevets**

(19)

(11) Publication number: **0 060 724**
A2

## (12) EUROPEAN PATENT APPLICATION

(21) Application number: **82301348.7**

(22) Date of filing: **16.03.82**

(51) Int. Cl.³: **F 25 B 49/00, B 60 P 3/20, F 25 D 11/00, B 65 D 88/74**

(30) Priority: **17.03.81 GB 8108319**

(43) Date of publication of application: **22.09.82**
Bulletin 82/38

(84) Designated Contracting States: **AT BE CH DE FR IT LI LU NL SE**

(71) Applicant: **SEA CONTAINERS LIMITED, 1 Hanover Square, London W.1 (GB)**

(72) Inventor: **Cowley, Michael Alan, 304 Kuhlo Rise 51 Mount Sinai Drive, Singapore 1027 (SG)**
Inventor: **Whiteman, Ralph John, 7 King Edward Road, New Barnet Hertfordshire (GB)**
Inventor: **Foster, John Elliott, Garden Bungalow Prior's Hatch Lane, Hurtmore Nr. Godaiming Surrey (GB)**

(74) Representative: **Valentine, Francis Anthony Brinsley et al, REDDIE & GROSE 16 Theobalds Road, London WC1X 8PL (GB)**

(54) **Cargo refrigeration.**

(57) A refrigerated cargo container having a refrigeration unit 74 of variable capacity and an adjustable null band of temperatures over which it is inoperative is controlled by the lower temperature sensed by two temperature sensors positioned in the airflow to and from the cargo space. The unit 74 is fitted to an end wall of the container and separated from the cargo space by folding partition doors 70. Cooling air enters the cargo space through a slotted floor and leaves through an outlet above the doors 70 and immediately below the ceiling. The outlet is fitted with a grille 77 which avoids cavities in which unhygenic residues can build up.

Fresh air is admitted to the container and stale air vented through manually adjustable valves which include perforated screens to meet customs' requirements.

CARGO REFRIGERATION

The present invention relates to the refrigeration of cargo in cargo-holding spaces such as vehicle bodies and ISO containers.

The present invention provides a refrigerated cargo container comprising a container body having walls defining a cargo space, the cargo space having a lower air inlet for supply of cool air to the cargo space and an upper air outlet for exhaust of air from the cargo space, refrigeration apparatus for cooling and supplying air to the air inlet, first and second temperature sensors for sensing respectively the temperature of air supplied to the air inlet and the temperature of air exhausted from the cargo space, and means for comparing the outputs of the temperature sensors to provide an output representative of the lower temperature sensed by the sensors, the refrigeration apparatus including control means responsive to the output of the comparison means to reduce or stop cooling of air supplied to the air inlet of the cargo space when the lower temperature sensed by the sensors is below a predetermined value. This arrangement reduces the risk of bottom freezing due to a high rate of refrigeration in high external ambient temperatures and of top freezing of the cargo in low external ambient temperatures. Preferably a time delay is incorporated to prevent excessively frequent stopping and starting of the applied refrigeration.

The invention also provides a liquid-vapour refrigeration system comprising a compressor for compressing the vapour of a refrigerant fluid, a first flow path for feeding vapour compressed by the compressor to a condensor, a second flow path for feeding liquid refrigerant condensed by the condensor to an evaporator, the second flow path including an expansion valve for vaporisation of the condensed refrigerant into the evaporator, and a third flow path for return of vapour from the evaporator to the condensor, the system including means for varying the refrigeration capacity of the system without stopping operation of the compressor, a temperature sensor and control means responsive to the temperature sensor and arranged to stop the compressor when the sensed temperature is below a predetermined value and to reduce the capacity of the system when the sensed temperature is above the said predetermined value, the control means including means for setting manually a range of temperatures including the said predetermined value over which operation of the compressor is prevented.

This arrangement, when used in a refrigerated cargo container, can provide a finer control of cargo temperature than is achievable by the normal on-off control of a mechanically driven refrigeration unit, without the need for constantly starting and stopping the refrigeration unit.

The capacity can be reduced by throttling the input to the compressor and/or by partially by-passing the condensor and expansion valve to supply some compressed "hot" and "vapour" refrigerant directly to the evaporator.

Since the design of the compressor will require some minimum flow of refrigerant through it to prevent over-heating, the throttling of the input to the compressor may be used to provide a first stage of capacity reduction and when required, a second stage of capacity reduction can be achieved by by-passing some "hot" vapour to the evaporator. When temperature sensing means indicate that there is still too much refrigeration, the control unit will stop the refrigeration unit. Under some conditions, it will be advantageous to include heating means to supply heat into an airflow circulating through the cargo, for example to prevent freezing of the cargo in below-freezing external ambient conditions.

Advantageously, the control unit includes a manual adjustment for the temperature range, or null band, within which the heating and refrigerating circuits are inactive. Where the cargo is relatively insensitive the control unit can hold the temperature within this null band mainly by stopping and starting the refrigeration unit, with little or no operation under reduced efficiency conditions. Since the refrigeration unit will be operating under its full efficiency, the power consumption will be relatively low. If however it is required, in view of the delicate nature of the cargo, to hold the temperature within narrow limits, the refrigeration unit will be required to run for a greater time or indeed continuously under reduced efficiency. Accordingly, the finer temperature control can be assured without damage to the delicate cargo but the power consumption and thus operating cost will be somewhat increased.

Embodiments of the invention will now be described by way of example with reference to the drawings, in which:-

Figure 1 is a diagrammatic representation of a refrigeration system;

Figure 2 is a block diagram of a refrigeration control unit;

Figure 3 is an exploded perspective view of a part of a refrigerated cargo container;

Figure 4 is a perspective view of the container of Figure 3 with the ceiling and a wall broken away to show a refrigeration unit including the system of Figure 1 in situ; and

Figure 5 is a cross-sectional view of a valve which may be used in the container of Figures 3 and 4.

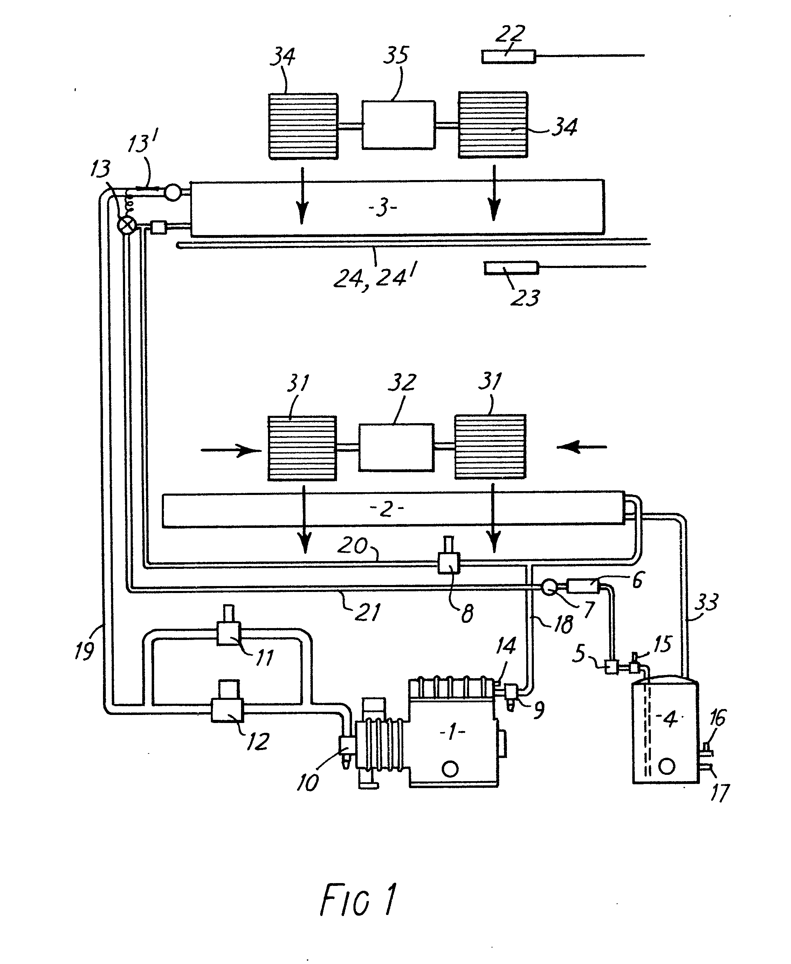

The refrigeration unit of Fig. 1 comprises a mechanical compressor 1 (driven by an electric motor) for compressing a refrigerant vapour. The compressed vapour leaving through the outlet valve 9 of the compressor passes through a line 18 to the condensor 2 where it gives up heat to the atmosphere, air being propelled through the condensor by radial flow fans 31 driven by an electric motor 32. The condensed refrigerant passes from the condensor to a receiver 4 through a line 33. The receiver 4 contains a cooling coil having external connections 16 and 17 through which a flow of cooling water can be passed under conditions when it is not possible to arrange a supply of air for the fans 31, the receiver 4 then acting as condensor.

The condensed refrigerant then passes through a safety valve 15, a shut off valve 5, a dryer 6 and a sight glass 7 to a line 21 and thence to an expansion valve 13 the outlet of which leads into the evaporator 3. Air from the refrigerated space is passed through the evaporator 3 by radial flow fans 34 driven by a motor 35. The outlet vapour from the evaporator 3 is returned through a line 19 and solenoid-operated by-pass valve 11 to the inlet valve 10 of the compressor. The expansion valve 13 is thermostatically controlled, having its sensing element 13' monitoring the temperature of vapour entering the line 19.

The temperature of air drawn from the refrigerated space by the fans 34 is monitored by a sensor 22 while the temperature of the air leaving the evaporator 3 is monitored by a sensor 23. When the temperature indicated by either of these sensors is within a preset range above a predetermined value, a control system described below operates to close the by-pass valve 11 and a variable throttling valve 12 reduces supply of vapour to the compressor inlet valve 10. The valve 12 is however constructed so as always to pass a predetermined minimum flow of vapour to prevent damage to the compressor. If the rate of refrigeration at this minimum value is still too great, the control system operates a solenoid valve 8 to divert some of the compressed vapour directly through a line 20 into the evaporator 3.

If the refrigeration capacity is still too great, the control system shuts off the compressor 1.

If the sensors 22 and 23 detect that the temperature in the cargo space continues to fall, the control system switches on electrical heaters 24, 24' on the outlet side of the evaporator 3.

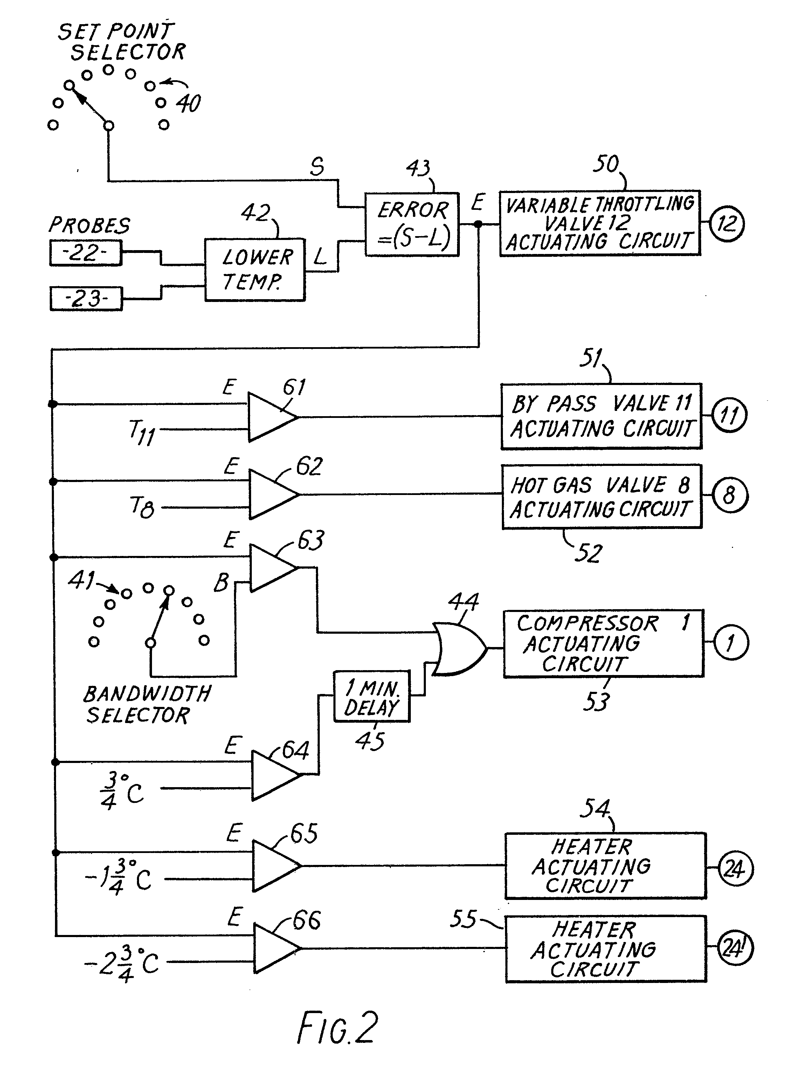

Figure 2 shows a block diagram of the control unit for the refrigeration circuit of Figure 1. The control unit has a set point selector 40 for selecting the required cargo temperature and a bandwidth selector selector 41 which allows the width of a null band, in which the circuit is inactive, to be varied. These parameters may conveniently be set using thumbwheel switches.

The outputs from two temperature sensitive probes 22,23 are passed into a lower temperature selector 42 which outputs a signal representing the lower L of these temperatures. A signal S representing the set point temperature and the signal L are then fed into a device 43 producing an error signal E equal to the difference between L and S. This error signal E is fed into an actuating circuit 50 to control the degree of throttling in the variable throttling valve 12 as described above. The error signal E is also compared with a set of reference values in a set of parallel comparators (61 to 66) in order to determine the appropriate degree of refrigeration or heating required for the error E.

Comparison with a preset value $T_{11}$ in a first comparator 61 yields an output which causes the by-pass valve actuating circuit 51 to close the by-pass valve 11 as the temperature drops below a first fixed value determined by $T_{11}$. With this valve 11 closed the return flow of refrigerant to the compressor 1 is determined solely by the variable throttling valve 12 which reduces the efficiency of the system and represents the first stage of control over refrigeration as the temperature L falls towards the required value S.

The error signal E is compared with a preset value $T_8$ in a second comparator 62 which yields an output causing the hot gas valve actuating circuit 52 to open the hot gas valve 8 as the temperature drops past a second fixed value, below the first, determined by $T_8$. This action further reduces the efficiency of the refrigeration system.

The error signal E is compared with a signal B selected by the present null bandwidth selector 41, in a third comparator 63. If the temperature falls within this band a signal is produced which, when passed via an "OR" gate 44 into a compressor actuating circuit 53 switches off the compressor 1, thereby preventing further refrigeration by the circuit of Figure 1. The compressor 1 is similarly switched off, via the "OR" gate 44, by a signal from a fourth comparator 64 produced when the error E indicates that the lower temperature represented by L is below or not more than

$\frac{3}{4}$°C above    the set point.    Transmission of this latter signal to the "OR" gate 44 is delayed by a device 45 for one minute to prevent a rapid thermal hysteresis building up about the set point temperature plus $\frac{3}{4}$°C   which would cause rapid switching of the compressor actuating circuit 53.

The null band in which heating or refrigeration is prevented extends for $1\frac{3}{4}$°C    below the set point.

Should L continue to fall after this value is reached a fifth comparator 65 causes the heater actuating circuit 54 to switch on a first section 24 of the heater.   A second section 24' of this heater is actuated by a sixth comparator 66 and the heater actuating circuit 55 if the temperature drops

below $2\frac{3}{4}$°C    below the set point.

As L rises the actuating circuits (50 to 55) are switched in the opposite sense as the reference values are passed, hence the control system acts to maintain the temperature within the cargo-holding space within, or near to, the null band.

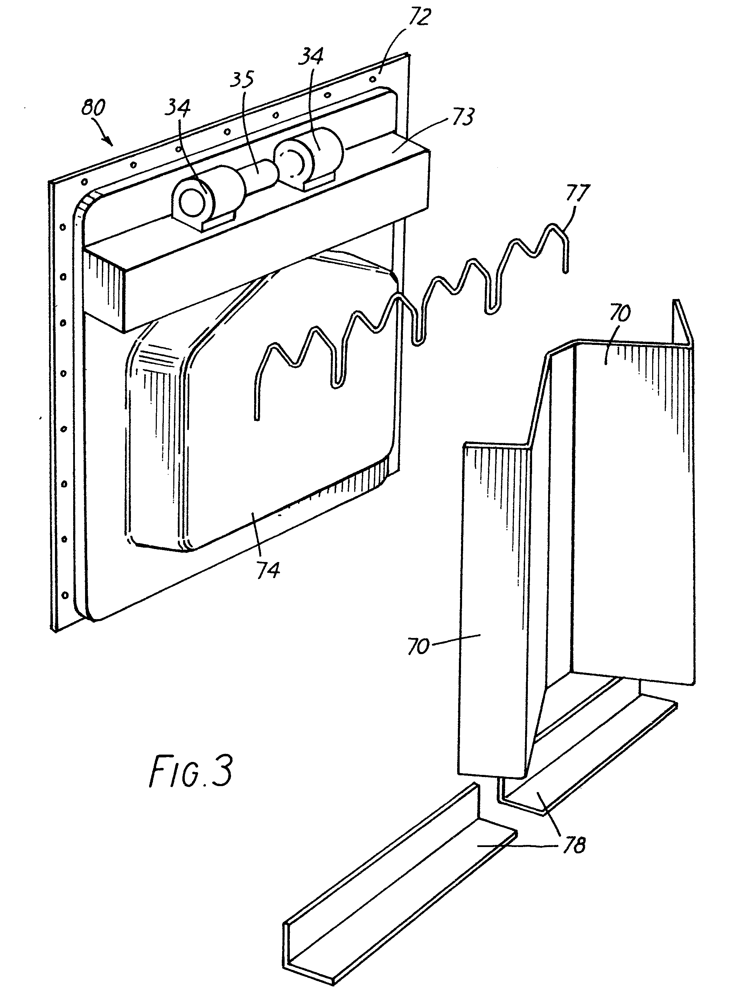

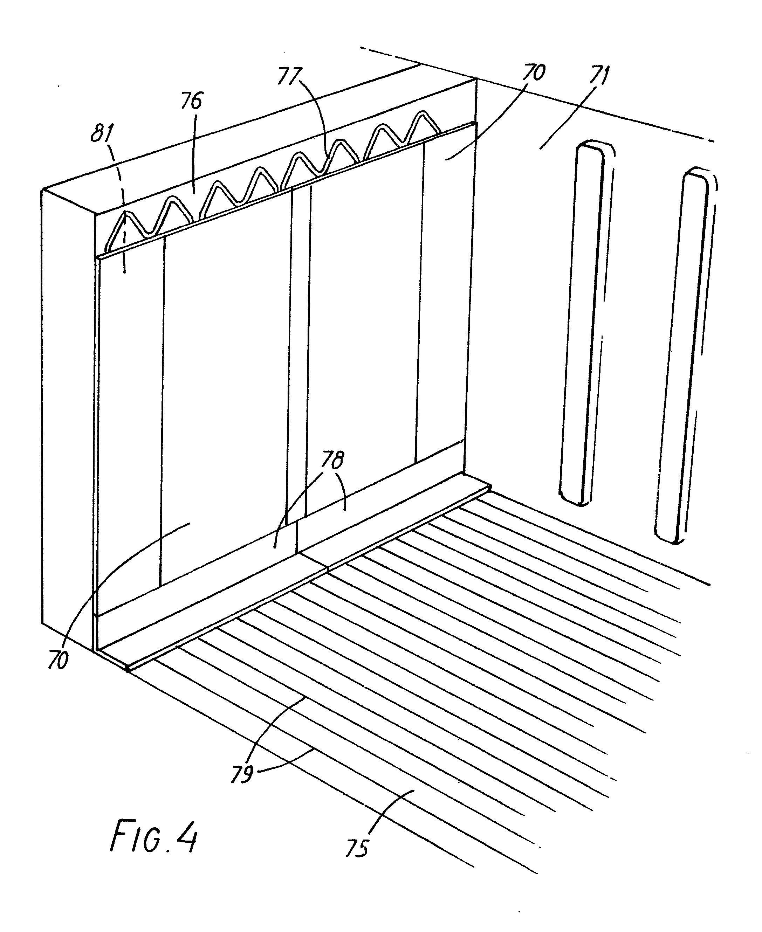

Figures 3 and 4 show perspective views of a refrigeration unit 80 separated by bulkhead doors 70 from the cargo space within a container 71.

The refrigeration unit 80 is mounted on a back plate 72 which is bolted, with the unit 80 projecting into the container 71, over an aperture in a wall of the container 71.

A casing 73 attached to the plate 72 extends horizontally across the width of the container 71 near to the ceiling (not shown), houses the evaporator 3 and heaters 24, 24' and supports radial flow fans 34 and the motor 35 for blowing the air drawn from the cargo space through the evaporator 3.   Beneath the casing 73 the remainders of the refrigeration circuit and the control unit of Figures 1 and 2 are contained in a narrower protective enclosure 74 also attached to the plate 72.

The rear bulkhead doors 70 are shown partially folded in Figure 3 but are normally unfolded, as shown in Figure 4, to extend across the width of the container 71 in front of the unit 80 and leave a gap 76 between them and the ceiling.   Since the gap 76 extends across the full width of the container interior, it is of less height than would be necessary if it extended only partially across the container 71 but it still presents the same flow area for return air. In use, cargo is prevented from falling into this inlet by an evaporator return air grille 77 formed from a meandering length of rod or bar attached to the vertical face of the casing 73.   Since air deflectors are avoided and the ceiling extends in an uninterrupted plane above but not in contact with the grille 77, which has relatively large bend radii, corners in which unhygienic residues may collect are avoided. Air leaving the casing 73 travels down ducts 81 either side of the enclosure 74 and under air control baffles 78 which direct the air horizontally away from the unit along underfloor ducts having outlet slots 79 in the floor 75 from which the supply of air may escape to permeate the cargo and thereafter return to the gap 76.

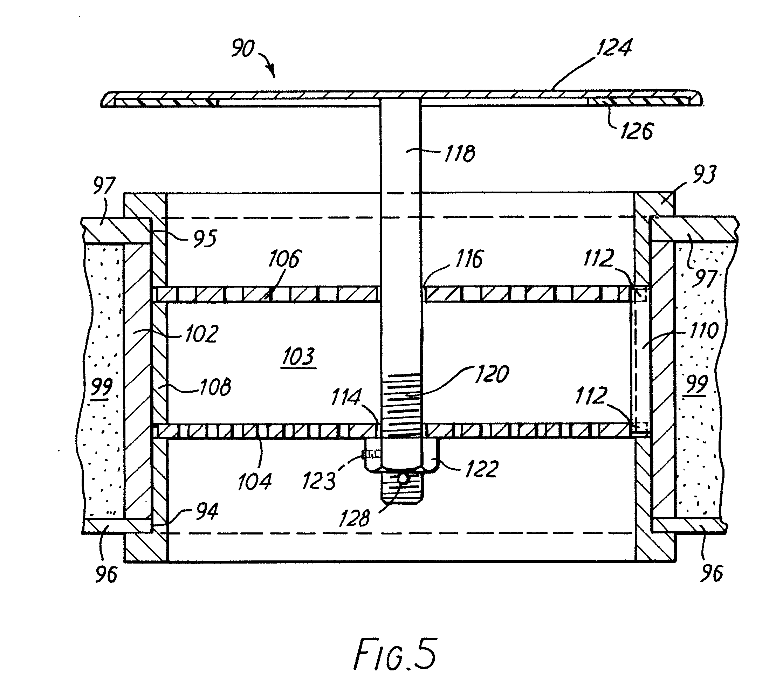

Figure 5 shows a valve 90 which may be fitted to the refrigerated container of Figure 4 for exhaust of stale refrigerating air from the container. An identical valve may also be used for intake of fresh air into the refrigeration system of the container. The stale and fresh air valves 90 are fitted in the end wall of the container which receives the plate 72, in the refrigerating air duct and to the high and low pressure sides respectively of the fans 34.

The valve 90 shown in Figure 5 comprises inner and outer flanged collars 92,93 fitted in respective circular apertures 94,95 in the inner 96 and outer 97 skins of the end wall of the container. A cavity of the end wall between the skins 96,97 is filled with insulating material 99 and an annular sleeve 102 forms a wall of a cylindrical duct 103 extending through the container wall between the apertures 94,95.

Inner and outer perforated discs 104,106 extend across the duct 103 and are held in contact with the interior end faces of the collars 92,93 by an annular spacer 108 fitted inside the duct 103. The spacer 108 has a locking key 110 which engages in notches 112 in the peripheries of the respective discs 104,106 and prevents rotation of the discs 104,106.

The number of discs 104, 106 used and the size and spacing of their perforations can be chosen to meet relevant customs requirements.

The discs 104,106 have respective central appertures 114,116 in which a spindle 118 is rotatable. An inner end portion 120 of the spindle 118 a screw-threaded and engages in a nut 122 secured to the inner disc 104. A nylon grub screw 123 is fitted in a threaded radial bore in the nut 122 and is in contact with the threaded portion 120 of the spindle 118. The grub screw 123 produces a resistance to rotation of the spindle 118 in the nut 122.

The spindle 118 carries at its outer end a circular damper plate 124 of slightly greater diameter than the diameter of the outer end face of the outer collar 93.

The surface of the damper plate 124 facing the outer collar 93 is fitted with a closed-cell neoprene gasket 126 which, when the valve is fully closed,forms a seal with the outer collar 93. The movement of the damper plate 124 in the valve-opening direction is limited by abutment of a stop pin 128, protruding from the spindle 118, against the nut 122.

The valve 90 is opened and closed by manual rotation of the damper 124, rotation in one direction opening the valve 90 and rotation in the opposite direction throttling the duct 103 progressively until the valve 90 is fully closed and the gasket 126 is seated on the outer collar 93.

In use of a container fitted with the valves 90 the valves are opened when it is desired to exhaust stale refrigerating air from the container and to admit fresh air. The dampers 124 of the valves are adjusted to give a desired degree of air-flow through their ducts 103 and the

0060724

resistance provided by the grub-screws 123 prevents the adjustment being altered by vibration of the container during use.

The replacement of part of the refrigerating air with fresh air prevents the build-up in the container or gases such as carbon dioxide and ethylene which are produced by certain food cargoes and which can lead to deterioration of the cargo if allowed to build-up.

If, for any reason, one of the valves 90 of the container is rendered inoperable, some exhaust and intake of refrigerating air will take place through the remaining operable valve. Further advantages of the valves 90 are that the dampers 124 do not protrude far beyond the outer skin 97 of the container wall, that the perforated discs 104, 106 allow customs regulations to be met and that the changes in direction of the air flow around the dampers 124 of the fresh air intake valves 90 tend to cause heavy airborne dust particles to be deposited before entering the cargo space of the container. The dampers 124 also help to meet customs requirements because they prevent easy access to the interior of the ducts 103 where contraband articles might otherwise be stowed.

0060724

## CLAIMS

1.     A refrigerated cargo container comprising a container body having walls defining a cargo space, the cargo space having a lower air inlet for supply of cool air to the cargo space and an upper air outlet for exhaust of air from the cargo space, refrigeration apparatus for cooling and supplying air to the air inlet, first and second temperature sensors for sensing respectively the temperature of air supplied to the air inlet and the temperature of air exhausted from the cargo space, and means for comparing the outputs of the temperature sensors to provide an output representative of the lower temperature sensed by the sensors, the refrigeration apparatus including control means responsive to the output of the comparison means to reduce or stop cooling of air supplied to the air inlet of the cargo space when the lower temperature sensed by the sensors is below a predetermined value.

2.     A container according to claim 1, in which the control means are arranged to stop the said cooling of air when the lower sensed temperature is below the said predetermined value and to reduce the cooling when the lower sensed temperature is between the said predetermined value and a first further predetermined value higher than the said predetermined value.

3.     A container according to claim 1 or 2 and including means for heating air supplied to the air inlet by the refrigeration apparatus, the control means being responsive to the output of the comparison means to
bring the heating means into operation when the lower
sensed temperature is below a second further predetermined
value lower than the said predetermined value.

4.      A container according to claim 2 or 3, in
which the control means includes means for adjusting
manually the said predetermined value whilst maintaining
a constant temperature interval between the said
predetermined value and the or each further predetermined
value.

5.      A container according to any of claims 1 to 4,
in which the control means includes means for setting
manually a range of temperatures including the said
predetermined value, the control means being arranged to
prevent operation of the refrigeration apparatus when the
lower sensed temperature lies within the said range.

6.      A container according to any of claims 1 to 5 and
including adjustable valve means for venting to the
external atmosphere of the container a portion of the air
exhausted from the cargo space and admitting fresh air
from the atmosphere for supply to the air inlet of the
cargo space.

7.      A container according to claim 6, in which the
valve means comprise an exhaust valve for venting air and
an inlet valve for fresh air, each valve comprising a duct extending through the container body, first and second spaced-apart perforated walls extending transversely of the duct and a damper at the outer end of the duct, having a stem extending into the duct and in screw-threaded engagement with at least one of the perforated walls to be rotatable in respective opposite directions from the exterior of the  container for movement away from and towards the outer end of the duct to open and to seal the duct.

8.      A container according to any of claims  1 to 7, in which a floor of the cargo space has a plurality of air inlets arranged for supply of cool air over substantially the whole of the floor.

9.      A container according to any of claims 1 to 8, in which the air outlet is in a vertical wall of  the cargo space and extends over substantially the whole width of the vertical wall adjacent the top of the wall.

10.     A container according to claim 8, in which a grille is positioned in the air outlet to prevent cargo passing out of the cargo space through the outlet, the grille being formed by a length of bar or rod attached to the container body and following a meandering path across the outlet, the bar or rod only being in contact with the container body adjacent the points of its attachment.

11.	A liquid-vapour refrigeration system comprising a compressor for compressing the vapour of a refrigerant fluid, a first flow path for feeding vapour compressed by the compressor to a condensor, a second flow path for feeding liquid refrigerant condensed by the condensor to an evaporator, the second flow path including an expansion valve for vaporisation of the condensed refrigerant into the evaporator, and a third flow path for return of vapour from the evaporator to the condensor, the system including means for varying the refrigeration capacity of the system without stopping operation of the compressor, a temperature sensor and control means responsive to the temperature sensor and arranged to stop the compressor when the sensed temperature is below a predetermined value and to reduce the capacity of the system when the sensed temperature is above the said predetermined value, the control means including means for setting manually a range of temperatures including the said predetermined value over which operation of the compressor is prevented.

12.	A refrigeration system according to claim 11, in which the capacity-varying means comprise adjustable valve means in the third flow path , the valve means having a predetermined minimum flow rate.

13.	A refrigeration system according to claim 10 or 11 in which the capacity-varying means comprise a fourth flow path for feeding vapour compressed by the compressor directly to the evaporator and adjustable valve means in the fourth flow path.

1/5

0060724

FIG 1

FIG.2

0060724

FIG.3

FIG.4

FIG.5